# EUROPEAN PATENT APPLICATION

(11) **EP 2 821 997 A1**
(43) Date of publication of application: **07.01.2015**
(21) Application number: 13305951.9
(22) Date of filing: 04.07.2013
(51) Int. Cl.: G11B 27/10, G11B 27/034, H04N 21/40, G06T 7/20

(54) **Method and device for editing a video sequence**

(71) Applicant: Thomson Licensing, 92130 Issy-les-Moulineaux (FR)
(72) Inventor: Crivelli, Tomas, 35576 Cesson-Sévigné (FR); Robert, Philippe, 35576 Cesson-Sévigné (FR); Fradet, Matthieu, Cesson-Sévigné 35576 (FR); Viellard, Thierry, 35576 Cesson-Sévigné (FR)
(74) Representative: Huchet, Anne

(57) **Abstract**

The invention relates to a method, performed by a computer, for editing a video sequence, comprising displaying a mother frame of said video sequence; capturing an information representative of an editing task applied by a user to said displayed mother frame; and simultaneously displaying at least one child frame of the video sequence wherein the captured information is temporally propagated.

## Description

### TECHNICAL FIELD

The present invention relates generally to the field of video editing. More precisely, the invention relates to a method and a device for editing a video sequence comprising multiple frames.

### BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Photo editing applications are known wherein a single image (photo) is modified. Several tools are currently available either for the professional artist or for a home user. Among the vast palette of image modification tasks that one can apply we can mention: re-coloring, tinting, blurring, painting/drawing, segmenting/masking associated to per-region effect application, cloning, inpainting, texture insertion, logo insertion, object removal, etc.

With the advent of modern video capturing, processing and streaming systems, huge amounts of video data either captured by an end-user or from professional footage (films, publicity, SFX) are available, and video editing tools are becoming more popular.

Firstly reasoning at the level of a single image, one would like to be able to perform the previously mentioned image modification tasks to a whole video sequence. However, manually editing each frame of a video in such photo editing application is very time-consuming and painful for the operator.

Secondly, reasoning at the level of a video (multiple images), solutions are provided in a number of professional video editing applications, such as Adobe After Effects software, for modifying the video as a whole. Methods are known for propagating information from a first frame to subsequent frames. For instance, the document US2010/0046830 A1, relatively to the so-called tool "RotoBrush" bundled with Adobe After Effects software, describes a method for propagating a segmentation mask. It comprises the initialization usually provided by the user, an automatic segmentation into two classes (foreground/background) of a next frame based on motion estimation and a combined color model extracted from the previous segmented frame and the original frame. However such methods for automatic temporal propagation of segmentation rely on a sequential propagation of information. A user is able to correct the automatic segmentation before continuing with the propagation to subsequent images but a user cannot correct any frame of the video sequence and see the result propagated to any other frame, without applying the process to all of the intermediate frames. Thus, such methods do not provide a display interface where results are displayed simultaneously for several frames of the sequence for interactive multi-frame editing task.

A highly desirable functionality of a video editing application is to be able to edit any image of the sequence and automatically propagate the change to the rest of the sequence.

### SUMMARY OF INVENTION

The invention is directed to a method for editing and visualizing several video frames simultaneously while propagating the changes applied on one image to the others.

In a first aspect, the invention is directed to a method, performed by a processor, for editing a video sequence, comprising the steps of displaying a mother frame of the video sequence; capturing an information representative of an editing task applied by a user to the displayed mother frame; and simultaneously displaying at least one child frame of the video sequence wherein the captured information is temporally propagated.

According to a further advantageous characteristic, the method comprises displaying a visual element linking the mother frame to the at least one child frame wherein when the visual element is inactivated by a user input, the temporal propagation of the captured information to the at least one child frame is inactivated.

According to another advantageous characteristic, the at least one child frame comprises any frame of the video sequence, distant from the mother frame from at least one frame.

According to another advantageous characteristic, the captured information is temporally propagated from the mother to the at least one child frame by a motion field of from-the-reference type.

According to another advantageous characteristic, the temporally propagated captured information in the at least one child frame is determined from the mother frame by a motion field of to-the-reference type.

According to a first variant, the information representative of an editing task comprises the location of a pixel of the mother frame on which a pointing element is placed; and the temporally propagated captured information comprises least a location in the at least one child frame which is function of a motion vector associated to the pixel of the mother frame toward the child frame.

According to a second variant, the information representative of an editing task comprises a location of a pixel of the mother frame on which a painting element is placed and comprises a region in the mother frame associated to the painting element; and the temporally propagated captured information comprises at least a location in the at least one child frame which is function of a motion vector associated to the pixel of the mother frame toward the child frame and comprises a region in the at least one child frame which is result of a transformation of the region from the mother to the child frame.

According to a third variant, the information representative of an editing task comprises an ordered list of locations in the mother frame corresponding to an ordered list of vertices of a polygon; and the temporally propagated captured information comprises an ordered list of locations in the at least one child frame, wherein each location in the at least one child frame is function of a motion vector associated to each location in the mother frame toward the child frame.

According to a fourth variant, the information representative of an editing task comprises a color value for a set of pixels of the mother frame; and the temporally propagated captured information comprising a color value of a pixel in the at least one child frame which is function of color value for the set of pixels of the mother frame, wherein the location of the set of pixels in the mother frame is function of a motion vector associated to the pixel in the at least one child frame to the mother frame.

According to a refinement of first to third variants, when the location in the at least one child frame, corresponding to the location in the mother frame, is occluded in the at least one child frame, the captured information is not propagated.

According to a refinement of the fourth variant, when the location of the set of pixels in the mother frame, corresponding to the location of the pixel in the at least one child frame, is occluded in the mother frame, the captured information is not propagated.

According to another advantageous characteristic, the method comprises a step of selecting, in response to a user input, a child frame as a new mother frame replacing the mother frame.

Advantageously, the method for multi-frame video editing allows accelerating the video compositing workflow for the professional user and is compatible with existing technologies. Advantageously, the method for multi-frame video editing is compatible with the implementation in mobile devices or tablets as long as the editing tasks are simple enough, adapted to the home-user and for instance relate to text insertion, object segmentation and per-region filtering, color modification, object removal. These functionalities can then be integrated into mobile applications, such as Technicolor Play, for modifying and sharing personal videos to a social network. Collaborative video editing and compositing between multiple users can profit from these tools as well.

In a second aspect, the invention is directed to a computer-readable storage medium storing program instructions computer-executable to perform the disclosed method.

In a third aspect, the invention is directed to a device comprising at least one processor; a display coupled to the at least one processor; and a memory coupled to the at least one processor, wherein the memory stores program instructions, wherein the program instructions are executable by the at least one processor to perform the disclosed method on the display.

Any characteristic or variant described for the method is compatible with a device intended to process the disclosed methods and with a computer-readable storage medium storing program instructions.

### BRIEF DESCRIPTION OF DRAWINGS

Preferred features of the present invention will now be described, by way of non-limiting example, with reference to the accompanying drawings, in which:
**Figure 1** illustrates steps of the method according to a preferred embodiment;
**Figure 2** illustrates displayed elements of a graphical interface according to a particular embodiment of the invention;
**Figure 3** illustrates a mother frame and a child frame with propagated information according to a particular embodiment of the invention; and
**Figure 4** illustrates a device according to a particular embodiment of the invention.

### DESCRIPTION OF EMBODIMENTS

The technology behind such method for multi-frame video editing comprising the propagation process is dense motion estimation. That is, the available motion field that, for each pixel of the reference image, assigns a motion vector that links the position of such pixel in the reference within another image of the video sequence. Such a method for generating a motion field is described in the international application PCT/EP13/050870 filed on January 17th 2013 by the same applicant. The international application describes how to generate an improved dense displacement map, also called motion field, between two frames of the video sequence using a multi-step flow method. Such motion fields are compatible with the motion field used in the present invention. Besides, the international application introduces the concept of from-the-reference and to-the-reference motion fields.

In a variant, such motion fields are pre-computed upstream of the video-editing task and increases the amount of stored data for a video sequence. In another variant, requiring more computing power, such motion fields are computed on-line along with the propagation tasks.

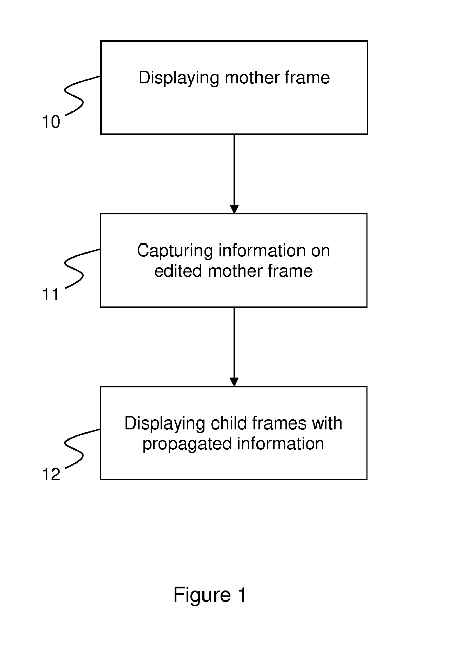

**Figure 1** illustrates steps of the method according to a preferred embodiment.

In a first step 10 of displaying mother frame, a frame among the frames of the video sequence is chosen by a user as the mother frame through an input interface. This mother frame is displayed on a display device attached to the processing device implementing the method. The mother frame, also called reference frame, corresponds to the frame to which the editing task will be applied. In the following, the term frame or image will be used indifferently and the term mother frame or reference frame will be used indifferently.

In a second step 20 of capturing an information representative of an editing task, an editing task as those previously detailed is manually applied by the user on the displayed mother frame and captured through an input interface. Variants of the editing tasks (also called editing tools) are hereinafter detailed along with their respective propagation mode for multi-frame image edition.

In a third step 20 of displaying child frames with temporally propagated information, at least a frame among the frames of the video sequence is chosen by a user as the child frames. Advantageously, the child frames are temporally distributed in the video sequence. That is, a child frame comprises any frame of the video sequence, advantageously temporally distant from the mother frame. The child frames are also displayed on the display device attached to the processing device implementing the method. The pixels in a child frame corresponding to the pixels modified in the mother frame are modified accordingly. To that end, the pixels in the child frame corresponding to the modified pixels in the mother frame are determined through dense motion fields between the reference frame and the child frames. In addition to the motion field attached to a given frame and linking it to another one, an occlusion mask indicates the pixels in the current field that are occluded in the other one. Advantageously, the occlusion mask deactivates the temporal propagation when a pixel of the mother frame is occluded in a child frame or when a pixel of the child frame is occluded in the mother frame according to the variant of propagation model of the editing task.

The steps of the method are advantageously performed in parallel, that is mother frame and child frames are displayed simultaneously and once a user enters a modification on the mother frame, the propagation of the modification in the displayed child frames is applied instantaneously. In a variant, the steps of the method are performed sequentially, that is mother frame and child frames are displayed together and once a user has entered a modification on the mother frame, the propagation of the modification in the displayed child frames is applied only after a user enters a command for propagating the modification.

In a refinement, the propagation is also controlled by a user not only for the displayed child frame but also for all the frames of the video sequence. This embodiment is particularly advantageous when the processing of the propagation is time consuming. Thus it can be preferable to apply the editing task first on the fly to the displayed child frames and then, after validation by the user, propagated to all the other frames. Advantageously, the method comprises a further step of rendering the video sequence as a whole wherein the video sequence includes the propagated information relative to the editing task.

According to a variant, any frame of the video sequence is selected by a user as the reference frame or as a child frame during a same editing task. In other words, the modification is applied to any of the images and the change is automatically propagated to the other frames of the video sequence. Thus a user editing a first mother frame may change of mother frame by making focus on one of the displayed child frames through the input interface and commit the focused child frame as the new mother frame. When the user makes focus on such image, it becomes momentarily the reference. This feature raises technical issue of the back and forward propagation of modifications between frames of the video sequence. The conflicts that may occur when applying different changes to different images can be resolved in different ways:
- The current change at the focused image is propagated to the rest, replacing all previous changes.
- The current change at the focused image is propagated to the rest, replacing only those pixels in the child frames that were not previously modified with the same multi-frame editing task. This history of changes is reset when the selected task is changed.

- The current change at the focused image is propagated to the rest, except to those pixels that where modified directly (with focus on the image) with the same multi-frame editing task.
- Any of the images can be independently locked by the user in order to avoid being modified at all.
- New modifications are blended with previous modified pixels with some user-defined standard blending methods: alpha, multiply, color burn, darken, lighten etc.

Other conflicts may occur when editing tasks are applied to multiple frames. When propagating such editing tasks to all the frames of the video sequence, one can wonder which frames among the multiple edited frames serve as a reference for the remaining frames of the video. This issue is particularly significant in the variant wherein the propagation to the rest of the video is performed off-line after a user validation. The skilled in the art will appreciate that various embodiments are compatible with the invention: the latest edited frame serves as a reference frame for all the frames of the sequence, the closest edited frame serves as reference frame for a given frame of the sequence, Advantageously, the various embodiments regarding the choice of the reference frame for a propagation based on dense motion field are controlled by a user.

According to other advantageous characteristics, variant embodiments of the editing tasks (also called editing tools) are described. Each editing task is associated to a multi-frame image editing propagation modes.

Images of the sequence are linked to the reference image by means of dense motion fields, computed for example using the multi-step flow method. Advantageously, a long-distance motion and correspondence field estimator is used. This kind of estimator is well adapted to cope with temporal occlusions, illumination variations and with minimal displacement drift error. In a variant, those motion fields are assumed to be pre-computed by another system or algorithm.

The way changes are automatically propagated from the reference frame to the rest can be done in several ways:
- Point-wise operation replication: the editing task comprises positioning a pointing device (or cursor) on a pixel on the reference image. The positioning of a pointing device is applied likewise to the corresponding pixel in the child images according to the from-the-reference motion vector for such pixel and such pair of images. The corresponding pixel corresponds to the closest pixel to the location pointed by the motion vector in the child image. If the pixel is occluded in the child image, the operation is not propagated. An embodiment of such point-wise operation replication is the multi-frame paintbrush with which a user draws in the reference image with some color and brush type. The same trace is applied to the child image.
- Point-wise operation replication with scaling and deformation: when the selected tool and/or selected brush type has a particular shape and size, this shape can be also transformed in the child frame in addition to the positioning of the center point. An embodiment of such point-wise operation replication with scaling and deformation is a circular brush used in the reference image. Such circular brush is deformed to a bigger or smaller ellipse in the child image, according to the transformation of the major and minor axis of the shape. In a variant, the shape is not modified in the child frame, that is the transformation corresponds to the identity function.
- Multi-frame polygon-based selection: when the tool selected belongs to the family of selection tools (square selection, circular selection, lasso selection, etc) the graphic paths or shape that defines the selection in the reference image is transformed into a selection in the child frame. In particular, a selection is considered as a sequence of vertices that define a polygon. Line segments between vertices determine the boundaries of the selection, which is closed between first and last vertices. The multi-frame selection is applied by translating such vertices into the child frame in the same order as in the reference frame, using the dense motion fields. If the pixel corresponding to a vertex of the polygon in the mother frame is occluded in the child image, the vertex is not propagated and the polygon comprises a vertex less. Interior and exterior regions are defined as the enclosing area of the selection curve.
- Multi-frame selection-based effect: after a selection is determined in the reference frame and instantaneously propagated to the child frames, an image processing effect or filter such as blur, emboss, tint, pixelate is applied to each selection in each frame.
- Pixel color propagation: modifications at the pixel level in the reference frame can be copied to child frames using to-the-reference motion vectors by propagating the interpolated color value of the vector final position in the reference. This task is useful for texture insertion task, comprising the insertion of logos. Two variants of pixel color propagation are possible:
   o Reference frame is completely modified and after validation by the user, child frame pixels are updated if the corresponding point in the reference was modified;
   o As the reference is modified, the area of modification is determined, the from-the-reference vectors are used to determine the corresponding to-edit area in the child frames and then to-the-reference vectors are used to update those pixels belonging to such area, by copying color information.
      If the pixel in the reference, i.e. resulting from the motion vector to-the-reference applied to the corresponding pixel in the child frame, is occluded, the color value of the pixel in the mother frame is not propagated. Alternative solutions such as region color filling by spatial propagation or inpainting of the color value inside the child frame are well suited to such occluded regions.
   • Zooming: A fundamental tool available in any image editing software is zooming. Though it does not concern a modification of the image itself, it can benefit from the multi-frame approach. While applying a zoom at a specific location of the reference image, the same operation, i.e the same percentage of zooming, can be applied at the corresponding locations in the children images. In this way, the editing process is simplified.

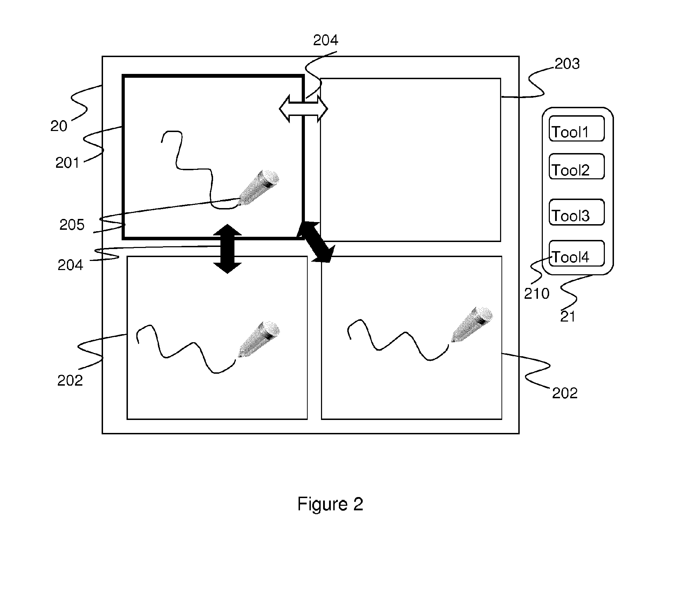

**Figure 2** illustrates displayed elements of a graphical interface according to a particular embodiment of the invention. The basic proposed interface comprises on a container window or work area 20, a component where the reference image 201 and at least one child frame 202, 203 are simultaneously displayed. A second container is a toolbox 21 which contains at least one multi-frame tool 210. A visual element 204 indicates that a child frame 202 is linked to the reference frame 201, such that if it is in its active state, changes in the reference frame 201 propagate to the child frame 202. The user selects a tool 210 from the toolbox 21 and applies an editing task on the reference frame 201. The effect is propagated to the childs 202. For example, with the draw tool 205, as the user draws on the reference 201, the trace appears also in the active children 202. On the contrary, when the visual element 204 indicates that a child frame 203 is not linked to the reference frame 201, changes in the reference frame 201 are not propagated to the child frame 202). In a variant, the interface comprises a third container (not represented) wherein the video sequence is rendered at any step of the edition.

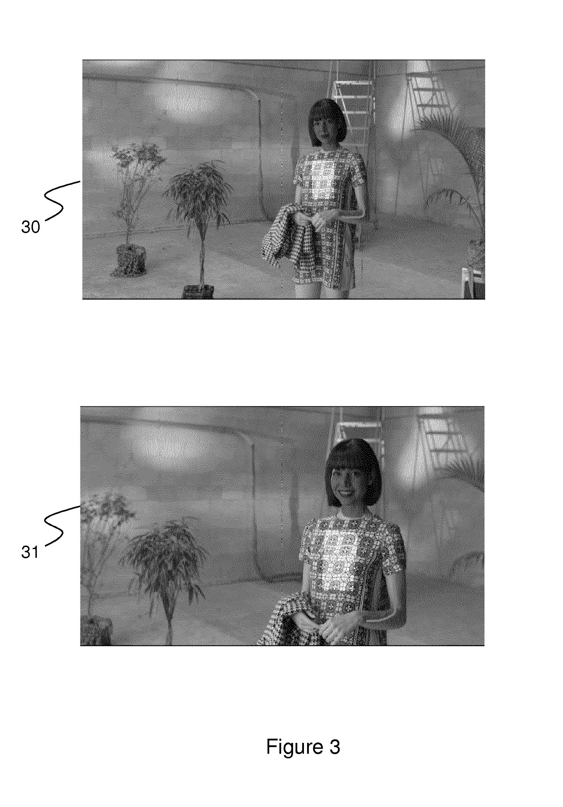

**Figure 3** illustrates a mother frame and a child frame with propagated captured information according to a particular embodiment of the invention. For instance, a reference frame 30 is displayed where modifications are applied. The modifications comprises modifying the color of the face of the character, lighting a rectangle on the rope of the character and drawing a blue line on the arm of the character. In a child frame 31, corresponding to a temporally distant frame of the sequence, the modification are automatically propagated. The propagation of a modification applied to any pixel of the mother frame is possible thanks to dense motion fields associated to the video sequence.

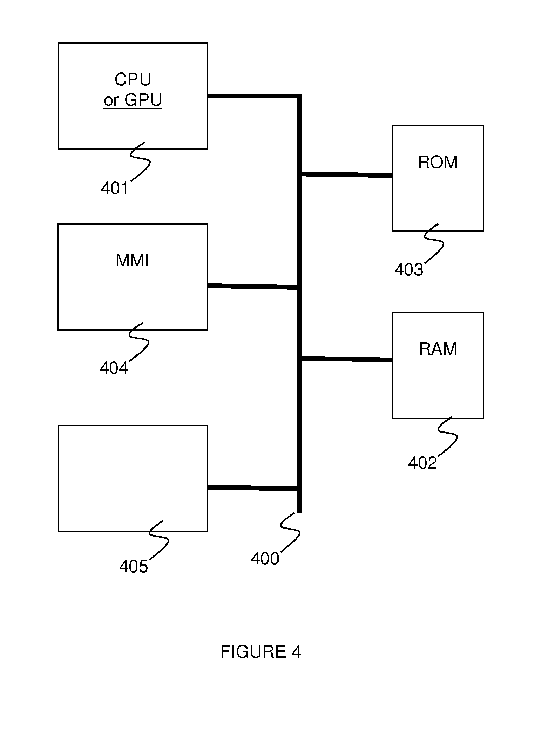

The skilled person will also appreciate that as the method can be implemented quite easily without the need for special equipment by devices such as PCs, laptops, tablets, PDA, mobile phone including or not graphic processing unit. According to different variants, features described for the method are being implemented in software module or in hardware module. **Figure 4** illustrates a device for editing a video sequence according to a particular embodiment of the invention. The device is any device intended to process video bit-stream. The device 400 comprises physical means intended to implement an embodiment of the invention, for instance a processor 401 (CPU or GPU), a data memory 402 (RAM, HDD), a program memory 403 (ROM), a man machine (MMI) interface 404 or a specific application adapted for the display of information for a user and/or the input of data or parameters (for example, a keyboard, a mouse, a touchscreen allowing a user to select and edit a frame..) and a module 405 for implementation any of the function in hardware. The term mam machine interface or user interface is indifferently used in the present description. Advantageously the data memory 402 stores the bit-stream representative of the video sequence, a set of dense motion fields associated to the video sequence, program instructions that may be executable by the processor 401 to implement steps of the method described herein. As previously exposed, the generation of dense motion is advantageously pre-computed for instance in the GPU or by a dedicated hardware module 405. Advantageously the processor 401 is configured to display mother frame and child frames on a display device 404 attached to the processor. In a variant, the processor 401 is Graphic Processing Unit, coupled to a display device, allowing parallel processing of the video sequence thus reducing the computation time. In another variant, the editing method is implemented in a network cloud, i.e. in distributed processor connected through a network interface. Thus variants of the physical embodiments are designed to implement variant embodiments of the propagation of captured information: either the propagation is applied for all the frames of the video on the fly thus requiring massive parallel computing or the propagation is firstly processed only for the displayed child frames and post-processed for the rest of the video frames.

Each feature disclosed in the description and (where appropriate) the claims and drawings may be provided independently or in any appropriate combination. Features described as being implemented in software may also be implemented in hardware, and vice versa. Reference numerals appearing in the claims are by way of illustration only and shall have no limiting effect on the scope of the claims.

In another aspect of the invention, the program instructions may be provided to the device 400 via any suitable computer-readable storage medium. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a random access memory (RAM); a read-only memory (ROM); an erasable programmable read-only memory (EPROM or Flash memory); a portable compact disc read-only memory (CD-ROM); an optical storage device; a magnetic storage device; or any suitable combination of the foregoing."

Naturally, the invention is not limited to the embodiments previously described. In particular, if various embodiments of editing tools along with their multi-frame propagation model are described, the invention is not limited to the described tools. In particular, the skilled in the art would easily generalize from described embodiments, a propagation model for other editing tools known in photo edition.

## Claims

1. A method for editing a video sequence, comprising :
• Displaying (10) a mother frame of said video sequence;
• Capturing (11) an information representative of an editing task applied by a user to said displayed mother frame;
**characterized in that** the method further comprises
• Simultaneously displaying (12) at least one child frame of said video sequence wherein the captured information is temporally propagated.

2. The method of claim 1 further comprising displaying a visual element linking the mother frame to said at least one child frame wherein when the visual element is inactivated by a user input, the temporal propagation of the captured information to the at least one child frame is inactivated.

3. The method of any of claims 1 to 2 further wherein said at least one child frame comprises any frame of the video sequence, distant from the mother frame from at least one frame.

4. The method of any of claims 1 to 3 wherein the captured information is temporally propagated from the mother to the at least one child frame by a motion field of from-the-reference type.

5. The method of any of claims 1 to 4 wherein the temporally propagated captured information in the at least one child frame is determined from the mother frame by a motion field of to-the-reference type.

6. The method of any of claims 1 to 5 wherein
• said information representative of an editing task comprises the location of a pixel of the mother frame on which a pointing element is placed; and wherein
• the temporally propagated captured information comprises least a location in the at least one child frame which is function of a motion vector associated to said pixel of the mother frame toward the child frame.

7. The method of claim of any of claims 1 to 5 wherein
• said information representative of an editing task comprises a location of a pixel of the mother frame on which a painting element is placed and comprises a region in the mother frame associated to said painting element; and wherein
• the temporally propagated captured information comprises at least a location in the at least one child frame which is function of a motion vector associated to said pixel of the mother frame toward the child frame and comprises a region in the at least one child frame which is result of a transformation of the region from the mother to the child frame.

8. The method of claim of any of claims 1 to 5 wherein
• said information representative of an editing task comprises an ordered list of locations in the mother frame corresponding to an ordered list of vertices of a polygon; and wherein
• the temporally propagated captured information comprises an ordered list of locations in the at least one child frame, wherein each location in the at least one child frame is function of a motion vector associated to each location in the mother frame toward the child frame.

9. The method of claim of any of claims 1 to 5 wherein
• said information representative of an editing task comprises a color value for a set of pixels of the mother frame; and wherein
• the temporally propagated captured information comprising a color value of a pixel in the at least one child frame which is function of color value for said set of pixels of the mother frame, wherein the location of said set of pixels in the mother frame is function of a motion vector associated to said pixel in the at least one child frame to the mother frame.

10. The method of claim of any of claims 6 to 8 wherein when the location in the at least one child frame, corresponding to the location in the mother frame, is occluded in said at least one child frame, the captured information is not propagated.

11. The method of claim 9 wherein when the location of said set of pixels in the mother frame, corresponding to the location of said pixel in the at least one child frame, is occluded in said mother frame, the captured information is not propagated.

12. The method of any of claims 1 to 11 further comprising selecting, in response to a user input, a child frame as a new mother frame replacing the mother frame.

13. A computer-readable storage medium storing program instructions computer-executable to perform the method of any of claims 1 to 12.

14. A device (400) comprising at least one processor (401); a display (404) coupled to the at least one processor; and a memory (402) coupled to the at least one processor, wherein the memory stores program instructions, wherein the program instructions are executable by the at least one processor to perform the method of any of claims 1 to 12 on the display.
